# FASCICULE DE BREVET EUROPEEN

(11) **EP 2 412 586 B1**
(45) Date de publication et mention de la délivrance du brevet: **01.05.2013**
(21) Numéro de dépôt: 10170826.1
(22) Date de dépôt: 26.07.2010
(51) Int. Cl.: B60R 25/00

(54) **Clé d'accès à un véhicule automobile à capacité d'échange en communication champs proche**
Zugangsschlüssel zu einem Kraftfahrzeug mit Austauschfähigkeit in Nahfeldkommunikation
Access key for an automobile capable of performing exchanges using near-field communication

(43) Date de publication de la demande: 01.02.2012
(73) Titulaire: Valeo Sicherheitssysteme, 85253 Erdweg (DE)
(72) Inventeur: Motz, Joel VALEO SECURITE HABITACLE, 94042 CRETEIL (FR); Krauss, Dietmar VALEO SECURITE HABITACLE, 94042 CRETEIL (FR)
(74) Mandataire: Larger, Solène

(56) Documents cités:
- US-A1- 2006 219 776
- US-A1- 2008 303 629
- US-B2- 7 520 424

## Description

L'invention concerne les clés de déverrouillage d'accès et/ou d'autorisation de démarrage de véhicule automobile, et en particulier les clés permettant de réaliser le déverrouillage du véhicule, par pression sur un bouton de la clé, par échange bidirectionnel sous forme de question-réponse avec le véhicule, ou encore par simple rapprochement d'un lecteur du véhicule et échange question-réponse en champs proche ou NFC avec le lecteur du véhicule.

L'invention concerne également l'utilisation de telles clés pour une communication en champ proche dans une application additionnelle au déverrouillage ou à l'autorisation de démarrage. La communication en champs proche, usuellement appelée NFC, pour Near Field Communication, utilise un protocole d'échanges de données basé sur des radiofréquences de très courte portée. Il s'agit d'une extension des techniques de radio-identification qui, tout en se basant sur la norme ISO/IEC 14443, permet la communication entre périphériques en mode pair à pair. Le protocole NFC est basé sur un couplage inductif et une modulation de charge au niveau d'un appareil esclave.

Au contraire d'autres techniques de radio-identification ou du bluetooth dont la portée est d'une dizaine de mètres, la technique NFC est utilisable sur de très courtes distances, quelques centimètres. Elle suppose une démarche volontaire de l'utilisateur et ne peut donc normalement pas être utilisée à son insu, ce qui apporte une garantie de sécurité pour des transactions sensibles comme une opération bancaire ou le déverrouillage d'un véhicule.

La technologie NFC est actuellement développée par un consortium industriel regroupé sous le nom de Forum NFC. La technologie NFC est dérivée de la technologie RFID (Radio Frequency Identification) et utilise des composants ou processeurs NFC présentant plusieurs modes de fonctionnement, notamment un mode lecteur et un mode émulation de carte.

En mode lecteur, un processeur NFC fonctionne comme un lecteur RFID conventionnel pour accéder en lecture ou écriture à une puce RFID. Le processeur NFC émet un champ magnétique, envoie des données par modulation de l'amplitude du champ magnétique et reçoit des données par modulation de charge et couplage inductif. Ce mode est également qualifié de mode actif car le processeur NFC émet un champ magnétique dans ce mode.

Dans le mode émulation, un processeur NFC fonctionne de façon passive à la manière d'un transpondeur pour dialoguer avec un autre lecteur et être vu par l'autre lecteur comme une puce RFID. Le processeur n'émet pas de champ magnétique, reçoit des données en démodulant un champ magnétique émis par l'autre lecteur et émet des données par modulation de l'impédance de son circuit d'antenne (modulation de charge). Ce mode est également qualifié de mode passif, car le processeur NFC n'émet pas de champ magnétique dans ce mode.

D'autres modes de communication peuvent être mis en oeuvre, notamment un mode dit "device" où un composant doit s'apparier avec un autre processeur NFC se trouvant dans le même mode de fonctionnement, chaque processeur NFC se place alternativement dans un état passif (sans émission de champ) pour recevoir des données et dans un état actif (avec émission de champ) pour émettre des données.

Dans ces trois modes de fonctionnement, un processeur NFC peut mettre en oeuvre plusieurs protocoles de communication sans contact par exemple ISO 14443-A, ISO 14443-B ou ISO 15693. Chaque protocole définit une fréquence d'émission du champ magnétique, une méthode de modulation de l'amplitude du champ magnétique pour émettre des données en mode actif, et une méthode de modulation de charge par couplage inductif pour émettre des données en mode passif.

Un certain nombre de normes définissent le protocole NFC :
- NFCIP-1 (ISO/IEC 18092) définit l'interface et le protocole de communication entre deux périphériques NFC;
- ISO/IEC 14443-1 à ISO/IEC 14443-4 définissent la communication avec des circuits intégrés sans contact;
- NDEF (NFC Data Exchange Format) définit le format d'échange logique des données.

La communication NFC présente généralement les caractéristiques suivantes :
- Débits de communication : 106, 212, 424 ou 848 kbit/s ;
- Gamme de fréquence : 13,56 MHz ;
- Distance de communication : environ 10 cm ;
- Mode de communication : half-duplex ou full-duplex ;

Le document intitulé « Schlüsselerlebnis » et publié le 16 avril 2010 par Tobias Schöllermann et Thomas Kratz sur le site internet www.elektroniknet.de propose d'intégrer de nouvelles fonctionnalités dans une clé de déverrouillage de véhicule munie d'une interface de communication NFC. La clé proposée intègre un circuit électronique disposant d'un accès à l'interface de communication NFC. Cet circuit électronique présente une mémoire lui permettant de stocker un certain nombre d'informations fournies par le véhicule durant son utilisation, par exemple la date de la prochaine révision, la date du prochain contrôle technique du véhicule, la quantité de carburant restante, l'emplacement du véhicule ou encore son état de fonctionnement. Ces informations peuvent ainsi utilement être consultées même lorsque l'utilisateur a quitté le véhicule. Le circuit électronique fournit un certain nombre d'autres applications à la clé. La clé est notamment utilisée pour authentifier l'utilisateur et mémoriser des titres de transport électronique, mémoriser des points de fidélité, procéder à un paiement d'achat ou enregistrer des droits d'utilisation de différents véhicules. Le circuit électronique de la clé peut notamment permettre de réaliser des réservations en authentifiant l'utilisateur, depuis un système de télécommunication intégrée dans le véhicule.

Le circuit électronique de commande de la clé est encapsulé à l'intérieur d'un boîtier de protection étanche. Outre la protection du circuit électronique contre les agressions extérieures, un tel boîtier ainsi que l'intégration du circuit électronique évitent également une manipulation de celui-ci par un utilisateur indélicat souhaitant en faire une utilisation frauduleuse à l'insu du propriétaire.

Une telle clé présente cependant en pratique un certain nombre d'inconvénients. Dans le cadre de la revente d'un véhicule, les clés d'accès aux véhicules sont transférées au nouveau propriétaire. Le circuit électronique présent dans la clé mémorise potentiellement des données personnelles particulièrement sensibles relatives à l'utilisateur. Le circuit électronique mémorise notamment des clés secrètes de chiffrement, telles que les données bancaires ou un certain nombre de données personnelles qu'il est souhaitable de ne pas fournir au nouveau propriétaire. Lors de la cession du véhicule, il est donc indispensable pour l'ancien propriétaire de procéder à la réinitialisation de la ou des clé(s) secrète(s) en passant par son concessionnaire ou à la génération de nouvelles clés secrètes. Cette opération peut constituer une démarche fastidieuse et longue, et ne pas présenter une garantie suffisante d'effacement pour l'ancien propriétaire. Par ailleurs, une utilisation massive d'une telle clé de véhicule pour une flotte de véhicules de location s'avère en pratique impossible. En effet, la réinitialisation ou le renouvellement d'une clé secrète à chaque changement d'utilisateur s'avérerait fastidieuse et rendrait l'utilisation d'une telle clé de véhicule inopérante, les données collectées par le circuit électronique pour un utilisateur devenant inutilisables sans de lourdes manipulations lors de la restitution du véhicule.

Le document US 2006/219776 A divulgue un ensemble selon le préambule de la revendication 1.

L'invention vise à résoudre un ou plusieurs de ces inconvénients grâce à un ensemble tel que défini à la revendication 1.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue éclatée d'un mode de réalisation privilégié de l'invention ;
- la figure 2 représente un ensemble constitué d'un identifiant de déverrouillage, et d'un identifiant d'exercice de droits à service, et d'un lecteur NFC selon l'invention ;
- les figures 3 et 4 représentent un mode de réalisation d'un identifiant de déverrouillage et identifiant d'exercice de droit à service selon un deuxième mode de réalisation de l'invention comportant un tiroir de logement ;
- les figures 5 et 6 représentent un mode de réalisation d'un identifiant de déverrouillage et identifiant d'exercice de droit à service selon un troisième mode de réalisation de l'invention.
- la figure 7 représente un mode de réalisation d'un identifiant de déverrouillage et identifiant d'exercice de droit à service selon un quatrième mode de réalisation de l'invention.

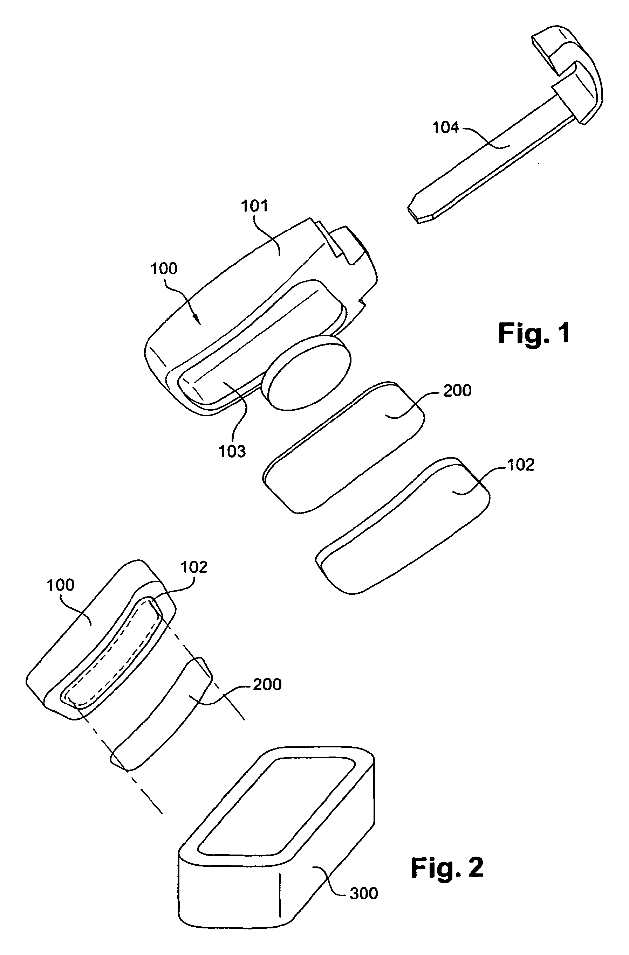

L'identifiant de déverrouillage et de démarrage 100 de la figure 1 comprend un corps principal 101 muni d'une fenêtre en face supérieure, fermée par un capot 102 maintenu en position ici par clippage, mais éventuellement par vissage, coulissement dans des rails complémentaires ou autre.

Le capot 102 recouvre donc le logement 103 pour pile, laquelle pile alimente les circuits électroniques de l'identifiant 100 destinés au déverrouillage et au démarrage du véhicule.

Le logement 103, refermé par le capot 102, renferme également un identifiant d'exercice de droits à services 200.

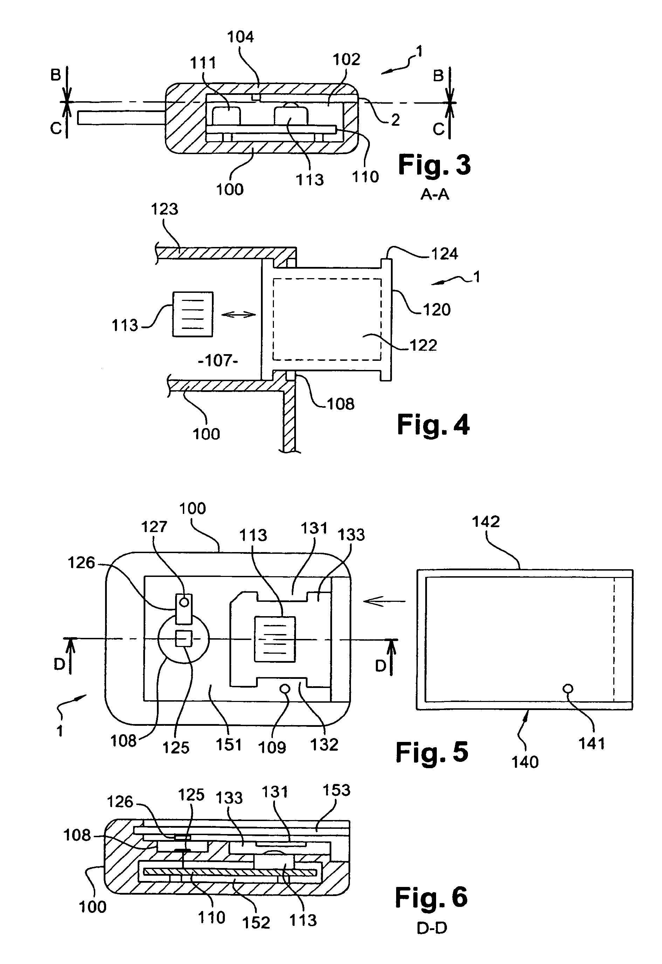

A la figure 3, on a représenté un ensemble constitué d'un tel identifiant de déverrouillage 100, d'un identifiant d'exercice de droits à service 200, et d'un lecteur NFC 300 lequel est connu en soi.

L'identifiant 200 comporte une antenne en bobine sensible au champs magnétique émis par le lecteur 300, laquelle antenne s'étend sur la circonférence de l'identifiant c'est-à-dire sur une étendue suffisante à cet effet et typiquement de 3 cm sur 3 cm, l'antenne étant reliée par ses deux extrémités à un processeur de l'identifiant 200 dont le rôle est de démoduler le signal induit prélevé en sortie de l'antenne, pour en prélever des données transmises par le lecteur 300.

Le processeur de l'identifiant 200 a également pour rôle de piloter une charge, inductif et capacitive montée aux bornes de l'antenne, pour provoquer une modulation du comportement de charge électrique de l'identifiant 200 afin que cette modulation de charge soit ressentie par le lecteur 300 et permettre à ce dernier d'en déduire un signal passif et une transmission de données au travers de ce signal passif en modulation de charge.

Selon le présent mode de réalisation privilégié, l'identifiant d'exercice de droit à service 200 se présente sous la forme d'un support autocollant portant l'antenne et le processeur. A cet effet le support est muni sur une face d'une colle permettant de solidariser le support sur une surface complémentaire et protégé initialement par une péllicule séparable, découvrant la surface adhésive lorsque séparée par l'utilisateur.

Un tel identifiant NFC autocollant est par exemple connu sous la marque Convego Air Mobile et commercialisé par la société Gieseke and Devrient.

Dans le cas présent, l'identifiant est solidarisé par sa face adhésive à la face du capot 102 qui est tournée vers le logement de pile de l'identifiant de déverrouillage 100.

De ce fait, l'identifiant de service 200 est protégé des agressions extérieures, se trouve placé à proximité de l'extérieur de l'identifiant de déverrouillage pour une fonction en transpondeur efficace, et ne nécessite aucune modification de la structure initiale de l'identifiant de déverrouillage 100.

De plus, grâce à l'utilisation d'un tel identifiant autocollant 200, l'identifiant 200 peut être changé à faible coût et sans manipulation fastidieuse notamment dans le cas de mise à jour d'amélioration d'un tel identifiant d'exercice de droits à service, notamment lorsque le service considéré se voit amélioré ou sécurisé au cours du temps.

L'utilisateur, utilisateur final ou en usine, doit pour placer l'identifiant 200 dans l'identifiant 100, ouvrir le capot 102, puis retire une pellicule protectrice recouvrant initialement la face adhésive de l'identifiant 200 de manière à mettre à nu cette surface, puis appliquée la surface adhésive de l'identifiant 200 sur la face intérieure du capot 102. Le capot 102 est ensuite replacé en fermeture du logement pour pile 103 de l'identifiant de déverrouillage 100.

La clé 100 forme ainsi de façon connue en soi un identifiant électronique de l'utilisateur, permettant son authentification pour permettre le déverrouillage des ouvrants du véhicule, un accès à l'habitacle du véhicule et la désactivation d'un système antidémarrage. Une fois qu'il a accédé à l'habitacle du véhicule, l'utilisateur peut notamment dans un mode de réalisation disposer la clé 100 dans une fente d'un lecteur monté dans le véhicule, typiquement ménagé au niveau de la planche de bord et communiquant avec la clé par échange basses fréquences, en utilisant pour cela d'éventuels aménagement de communication sans contact de l'identifiant 100. L'introduction de l'identifiant 100 dans ce lecteur permet d'assurer la désactivation de l'anti-démarrage du véhicule. Le démarrage du moteur peut par exemple être initié par appui sur un bouton disposé sur la planche de bord.

Le verrouillage du véhicule peut être réalisé automatiquement lorsque l'utilisateur s'éloigne du véhicule, par pression sur un bouton de l'identifiant 100, induisant l'émission d'une commande de fermeture à destination d'un récepteur du véhicule typiquement en radiofréquences ou encore par échange bidirectionnel avec l'identifiant 100 suite à une commande de verrouillage par exemple par contact manuel sur une zone spécifique d'une poignée de porte de véhicule. Le déverrouillage du véhicule peut bien entendu également être réalisé ainsi au moyen d'une clé mécanique 104 ici prévue en secours en cas de panne des moyens électroniques de l'identifiant 100.

Un certain nombre de transactions avec un terminal associé peuvent donc aussi être mises en oeuvre par l'intermédiaire de l'identifiant 200, en fonction des propriétés de l'identifiant 200, que l'identifiant 200 soit solidarisé à l'identifiant 100 ou séparé de celui-ci. La transaction par le protocole NFC avec le lecteur 300 est par exemple une mise à jour dans la mémoire de l'identifiant 200, à la hausse ou à la baisse, de points de fidélité lors d'un achat, une mémorisation des paramètres de fonctionnement du véhicule durant son utilisation, une fixation ou une décrémentation d'un droit à délivrance de carburant autorisé, une mémorisation ou la consommation de billets de transport ou d'entrée à une installation de services, une mémorisation ou l'utilisation d'un droit d'accès à un bâtiment, une transaction de type porte-monnaie électronique c'est-à-dire le rechargement ou la consommation d'une valeur pécuniaire stockée localement dans la clé ou encore l'utilisation d'une clé bancaire secrète pour une transaction bancaire. Dans ce dernier cas, et de manière connue en soi, l'écriture dans l'identifiant amovible 200 consiste en l'écriture d'un chiffre aléatoire délivré par un serveur à distance et transmis ici directement à l'identifiant 200 via NFC, et la lecture d'un résultat obtenu par application d'une clé secrète préservée dans l'identifiant amovible 200 et mise en oeuvre à l'aide d'un algorithme stocké et exécuté par un processeur de l'identifiant amovible 200 lui-même.

La transaction consiste donc avantageusement en l'exercice ou la modification d'un droit à prestation par utilisation des données stockées dans le identifiant amovible 200. Ce droit peut être matérialisé par une clé bancaire secrète donnant accès au débit d'un compte bancaire à distance, ce droit peut être en alternative un montant stocké localement dans le identifiant amovible 200 par exemple dans le cas de l'exercice de points de fidélité. Ce droit peut également être matérialisé par un montant indiquant une quantité de carburant pouvant être prélevée sur une durée donnée, dans le cas d'un véhicule de société.

Plus généralement l'identifiant amovible 200 contient donc des données correspondant à des droits à un prestation, par exemple une prestation de paiement, et ces données sont par exemple une clé secrète donnant lieu à authentification auprès d'une entité délivrant la prestation, ou un montant sous la forme d'une valeur numérique correspondant à une certaine quantité autorisée d'une telle prestation.

Dans un mode de réalisation particulier, la clé de déverrouillage du véhicule 100 comporte une fente de réception pour un identifiant amovible 200 qui est une carte bancaire à communication sans contact du type Paypass, au format carte de visite ou non, la carte bancaire dépassant alors de la clé de déverrouillage lorsqu'elle est positionnée dans la fente.

Selon un mode de réalisation représenté à la figure 4, l'accès d'un identifiant 200 à un logement 106 est fourni par une ouverture ménagée dans une face de l'identifiant 100. Une butée latérale 105 forme un rail de guidage guidant le identifiant 200 en coulissement lors de son introduction à travers l'ouverture. Les surfaces périphériques de l'ouverture permettent également de guider le identifiant 200 en coulissement. Une butée axiale 104 limite la course de coulissement du identifiant 200 lors de son introduction. Un rabat non illustré peut être monté sur la coque, de façon à obturer sélectivement l'ouverture et permettre de conserver une protection contre la poussière et l'humidité à l'intérieur de la cavité 106.

Le logement 106 peut être conçu pour recevoir une carte à puce ou carte à microprocesseur 200, notamment selon la norme ISO 7816, intégrant des fonctions de chiffrement et d'authentification et intégrant la fonction de communication NFC, incluant une antenne et un démodulateur ainsi qu'un modulateur de charge de telle sorte à renvoyer un message ici de manière autonome au lecteur 300 par modulation de cette charge.

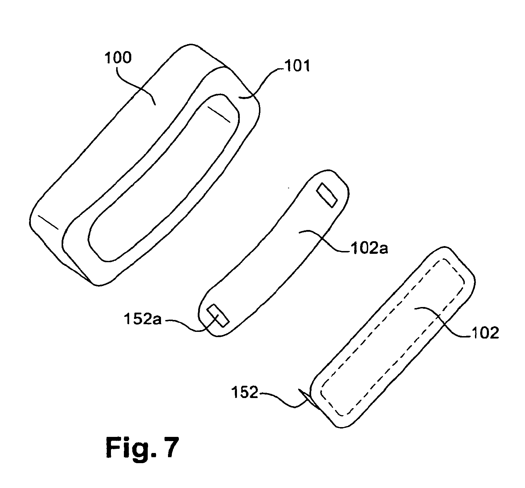

La figure 7 est une vue en coupe de dessus d'un mode de réalisation d'une clé 100. Dans ce mode de réalisation, un tiroir 120 est monté coulissant dans une rainure 107 ménagée à l'intérieur de l'identifiant 100. Le tiroir 120 présente des butées 123 permettant de définir sa position d'ouverture maximale. Les butées 123 permettent également de guider le tiroir 120 en coulissement dans la rainure 107. Le tiroir 120 présente une empreinte 122 destinée à recevoir le identifiant amovible 2. L'empreinte 122 forme ainsi un logement pouvant être disposé à l'extérieur de l'identifiant 100 pour faciliter l'introduction du identifiant 200. Afin de favoriser l'étanchéité à l'intérieur du corps principal 101 de l'identifiant 100, le tiroir 120 présente des excroissances 124 venant se loger dans des renfoncements 128 du corps principal 101 de l'identifiant 100. Les excroissances 124 et les renfoncements 128 peuvent être configurés pour permettre à l'extrémité du tiroir 120 d'être affleurante avec la coque en position fermée.

Les figures 5 et 6 représentent un troisième mode de réalisation d'une clé 100 selon l'invention. Dans ce mode de réalisation, un boîtier étanche 152 est ménagé à l'intérieur d'une coque de l'identifiant 100. Le boîtier étanche 152 peut être obtenu par la formation d'une paroi périphérique d'un seul tenant par moulage. Le boîtier étanche 152 peut ainsi définir une zone sèche, protégeant un circuit de contrôle de l'identifiant 100 contre des agressions extérieures, notamment contre l'humidité ou la poussière.

Une cavité 151 ménagée dans la coque de l'identifiant 100 est formée de façon séparée par rapport au boîtier étanche 152. Un réceptacle 108 est formé dans la cavité 151 pour recevoir une pile d'alimentation. Le réceptacle 108 présente un contact électrique 125 au niveau de sa paroi de fond. Un autre contact électrique 126 est monté pivotant par l'intermédiaire d'un axe 127 à l'aplomb du réceptacle 108, pour permettre l'introduction d'une pile dans le réceptacle 108. Les contacts électriques 125 et 126 sont destinés à venir en contact avec des pôles d'une pile ou batterie placée dans le réceptacle 108, pour assurer l'alimentation des circuits électroniques logés dans le boîtier 152.

Un logement 133 de réception de l'identifiant NFC amovible 200 est également formé dans la cavité 151. Une ouverture ménagée dans une face de la coque 100 permet l'introduction de l'identifiant amovible 200 dans le logement 133. L'interface 113 est disposée à l'aplomb du logement 133. L'étanchéité autour de l'interface 113 est assurée par tous moyens appropriés pour maintenir le boîtier 152 étanche par rapport à la cavité 151. Le logement 133 est surplombé par des ergots 131 et 132, permettant le guidage en coulissement de l'identifiant amovible 200 lors de son introduction, ainsi que son maintien en position.

L'identifiant 100 présente également un capot amovible 140. Le capot amovible 140 est configuré pour fournir sélectivement un accès à la cavité 151 ou isoler cette cavité de l'extérieur. Le capot 140 est par exemple retiré afin de changer la pile ou d'extraire ou d'introduire un identifiant amovible 200 tel que décrit dans le premier mode de réalisation dans le logement 133. Le capot 140 présente avantageusement un rebord 142 pouvant coulisser dans une rainure 153 ménagée dans la coque 100. Le capot 140 peut ainsi coulisser par rapport à la coque 100 jusqu'à une position dans laquelle il obture l'accès à la cavité 151. Le capot 140 peut être maintenu en position fermée au moyen d'une vis traversant un orifice 141 du capot 140 et vissée dans un alésage fileté 109 ménagé dans une paroi de la coque 100.

Le capot 140 et/ou la coque 100 peuvent être munis d'un joint d'étanchéité pour garantir l'étanchéité de la cavité 151 lorsque le capot 140 est en position fermée. Le joint peut par exemple être surmoulé ou collé sur le capot 140.

Selon un mode de réalisation avantageux représenté à la figure 7, l'ensemble comprend un capot de logement de pile de rechange 102a de sorte que l'identifiant de démarrage et/ou de déverrouillage peut être équipé alternativement du capot 102 sur lequel est fixé l'identifiant d'exercice de droit à service ou par le capot de rechange 102a, lequel capot de rechange 102a forme ici mais non exclusivement un capot ne portant pas d'identifiant d'exercice de droit à service.

L'identifiant de déverrouillage et/ou de démarrage 100 est constitué d'un corps principal 101 sur lequel est fixé de manière amovible le capot 102 sur lequel est fixé l'identifiant d'exercice de droit à service, et le capot sur lequel est fixé l'identifiant d'exercice de droit à service présente un aspect de surface formant distinction visuelle de l'aspect de surface du corps principal de l'identifiant de déverrouillage et/ou de démarrage de véhicule automobile. Dans le présent exemple, le capot 102 porteur de l'identifiant de droit à service est de couleur rouge contre une couleur typiquement grise ou noire pour le corps 101 de l'identifiant de déverrouillage 100. Ainsi, lorsque c'est le capot 102 porteur de l'identifiant de droit à service qui est fixe sur l'identifiant d'accès, l'utilisateur le constate immédiatement à l'oeil. Grâce à cette disposition, l'utilisateur s'aperçoit immédiatement d'un scénario où son capot équipé aurait été subtilisé et remplacé par un capot ordinaire ne portant pas d'identifiant de droit à service.

Le capot équipé, ici proposé comme ayant une couleur particulière, peut également se distinguer de l'état de surface du corps principal 101 de l'identifiant 100 par une granulosité particulière, une inscription en surépaisseur ou un logo particulier, coloré ou en relief.

Le capot 102 forme donc un capot alternatif au capot de rechange 102a de sorte que le logement de pile peut être équipé alternativement du capot 102a ou du capot alternatif 102 lequel forme support d'identifiant d'exercice de droit à service

Dans le présent mode de réalisation, le capot 102 portant l'identifiant d'exercice de droit est muni de moyens de fixation amovible pour être fixé de manière amovible en recouvrement du capot 102a. Ainsi, le capot porteur d'identifiant de droit à service forme un module autonome et séparable, pouvant être solidarisé à l'identifiant déjà fermé ou être utilisé en paiement également de manière séparée de l'identifiant, l'identifiant restant fermé de manière étanche par son capot initial. Aux fins d'une telle fixation séparable du capot porteur de l'identifiant de droit à service sur le capot 102a, on prévoit ici un paire d'ergots de clipsage 152 sur le capot 102 porteur d'identifiant de droit à service et une paire de logements d'accrochage complémentaires 152a pour ces ergots en face externe du capot de rechange 102a.

Là encore, le capot 102 sur lequel est fixé l'identifiant d'exercice de droit à service formant capot alternatif présente un aspect de surface formant distinction visuelle de ce capot alternatif par rapport de l'aspect de surface du corps principal 101 de l'identifiant de déverrouillage 100 de véhicule automobile de sorte qu'un utilisateur s'aperçoit tout de suite du vol du capot 102 porteur de l'identifiant de droit à service, que ce capot soit initialement monté en lieu et place du capot 102a ou en recouvrement du capot 102a.

## Revendications

1. Ensemble constitué d'un identifiant (100) de déverrouillage et/ou de démarrage de véhicule automobile, d'un identifiant (200) d'exercice de droit à service apte à communiquer sans contact, et d'un lecteur de communication en champs proche (300) de type NFC, l'identifiant d'exercice de droit à service (200) constituant indépendamment de l'identifiant de déverrouillage et/ou de démarrage (100) un identifiant en champs proche NFC autonome de telle sorte que l'identifiant d'exercice de droit à service (200) communique directement avec le lecteur en champs proche NFC (300) qu'il soit solidarisé avec l'identifiant de déverrouillage et/ou de démarrage (100) ou qu'il soit séparé de l'identifiant de déverrouillage et/ou de démarrage (100), **caractérisé en ce que** l'identifiant d'exercice de droit à service (200) comprent une surface adhésive de sorte que l'identifiant est fixé sur une surface support (102) de l'identifiant (100) de déverrouillage et/ou de démarrage par adhésion.

2. Ensemble selon la revendication 1, **caractérisé en ce que** l'identifiant de déverrouillage et/ou de démarrage (100) comprend un logement de pile (103) et un capot amovible (102) du logement de pile, et **en ce que** l'identifiant d'exercice de droit à service (200) est fixé au capot (102) du logement de pile (103).

3. Ensemble selon la revendication précédente, **caractérisé en ce que** le capot (102) comprend un face orientée vers l'intérieur du logement de pile (103) et une face orientée vers l'extérieur de l'identifiant de démarrage et/ou d'accès au véhicule (100), et l'identifiant de l'identifiant d'exercice de droit à service (200) est fixé sur la face du capot (120) du logement de pile qui est orientée vers l'intérieur du logement de pile (103).

4. Ensemble selon l'une quelconque des revendications précédentes, **caractérisé en ce que** l'identifiant d'exercice de droit à service (200) est un identifiant de paiement.

5. Ensemble selon la revendication précédente, **caractérisé en ce que** l'identifiant de droit à service (102) est un identifiant de type convego air mobile.

6. Ensemble selon l'une quelconque des revendications précédentes en combinaison avec la revendication 2, **caractérisé en ce qu'**il comprend un capot de logement de pile de rechange (102a) de sorte que l'identifiant de démarrage et/ou de déverrouillage peut être équipé alternativement du capot (102) sur lequel est fixé l'identifiant d'exercice de droit à service (200) ou par le capot de rechange (102a).

7. Ensemble selon la revendication précédente, **caractérisé en ce que** l'identifiant de déverrouillage et/ou de démarrage de véhicule automobile (100) est constitué d'un corps principal (101) sur lequel est fixé de manière amovible le capot (102) de logement de pile sur lequel est fixé l'identifiant d'exercice de droit à service, et le capot (102) sur lequel est fixé l'identifiant d'exercice de droit à service présente un aspect de surface formant distinction visuelle de l'aspect de surface du corps principal (101) de l'identifiant de déverrouillage et/ou de démarrage de véhicule automobile.

8. Ensemble selon l'une quelconque des revendications précédentes, **caractérisé en ce que** l'identifiant (100) de déverrouillage et/ou de démarrage comprend un logement de pile (103) et un capot amovible (102a) du logement de pile, ainsi qu'un support (102) fixé de manière amovible sur le capot de logement de pile, et **en ce que** l'identifiant d'exercice de droit à service est fixé sur ledit support (102) fixé de manière amovible sur le capot du logement de pile.

9. Ensemble selon la revendication précédente, **caractérisé en ce que** le support (102) fixé de manière amovible sur le capot amovible (102a) du logement de pile constitue un capot alternatif (102) audit capot de logement de pile (102a), de sorte que le logement de pile (103) peut être équipé alternativement dudit capot de logement de pile (102a) ou du support (102) portant l'identifiant d'exercice de droit à service (200) lequel support (102) formant alors capot de logement de pile alternatif (102) à la place dudit capot de logement de pile (102a).

10. Ensemble selon la revendication précédente, **caractérisé en ce que** l'identifiant de déverrouillage et/ou de démarrage de véhicule automobile (100) est constitué d'un corps principal (101) sur lequel est fixé de manière amovible ou bien le capot de logement de pile (102, 102a) ou bien le capot alternatif formé par le support de l'identifiant d'exercice de droit à service (200) et **en ce que** le capot alternatif formé par le support de l'identifiant d'exercice de droit à service (200) présente un aspect de surface formant distinction visuelle de ce capot alternatif (102) par rapport de l'aspect de surface du corps principal (101) de l'identifiant de déverrouillage et/ou de démarrage (100) de véhicule automobile.

## Claims

1. Assembly consisting of an identifier (100) for unlocking and/or starting a motor vehicle, of an identifier (200) for the exercise of service entitlement capable of contactless communication, and a near-field communication reader (300) of the NFC type, constituting the identifier for the exercise of service entitlement (200) independently of the identifier for unlocking and/or starting (100) a stand-alone near-field identifier NFC such that the identifier for the exercise of service entitlement (200) communicates directly with the near-field reader NFC (300) whether it be secured to the identifier for unlocking and/or starting (100) or whether it be separated from the identifier for unlocking and/or starting (100), **characterized in that** the identifier for the exercise of service entitlement (200) comprises an adhesive surface such that the identifier is fixed to a supporting surface (102) of the identifier (100) for unlocking and/or starting by adhesion.

2. Assembly according to Claim 1, **characterized in that** the identifier for unlocking and/or starting (100) comprises a battery housing (103) and a removable cap (102) of the battery housing, and **in that** the identifier for the exercise of service entitlement (200) is fixed to the cap (102) of the battery housing (103).

3. Assembly according to the preceding claim, **characterized in that** the cap (102) comprises a face oriented towards the inside of the battery housing (103) and a face oriented towards the outside of the identifier for starting and/or access to the vehicle (100), and the identifier of the identifier of the exercise of service entitlement (200) is fixed to the face of the cap (120) of the battery housing that is oriented towards the inside of the battery housing (103).

4. Assembly according to any one of the preceding claims, **characterized in that** the identifier for the exercise of service entitlement (200) is a payment identifier.

5. Assembly according to the preceding claim, **characterized in that** the identifier for service entitlement (102) is an identifier of the Convego Air Mobile type.

6. Assembly according to any one of the preceding claims in combination with Claim 2, **characterized in that** it comprises a replacement battery housing cap (102a) such that the identifier for starting and/or unlocking can be equipped alternatively with the cap (102) to which the identifier for the exercise of service entitlement (200) is fixed or by the replacement cap (102a).

7. Assembly according to the preceding claim, **characterized in that** the identifier for unlocking and/or starting a motor vehicle (100) consists of a main body (101) to which is removably fixed the cap (102) for housing a battery to which is fixed the identifier for the exercise of service entitlement, and the cap (102) to which is fixed the identifier for the exercise of service entitlement as a surface appearance forming a visual distinction from the appearance of the surface of the main body (101) of the identifier for unlocking and/or starting a motor vehicle.

8. Assembly according to any one of the preceding claims, **characterized in that** the identifier (100) for unlocking and/or starting comprises a battery housing (103) and a removable cap (102a) of the battery housing, and a support (102) fixed removably to the cap for housing a battery, and **in that** the identifier for the exercise of service entitlement is fixed to the said support (102) fixed removably to the cap of the battery housing.

9. Assembly according to the preceding claim, **characterized in that** the support (102) removably fixed to the removable cap (102a) of the battery housing forms an alternative cap (102) to the said battery-housing cap (102a), such that the battery housing (103) can be fitted alternatively with the battery-housing cap (102a) or with the support (102) carrying the identifier for the exercise of service entitlement (200) which support (102) then forming an alternative battery-housing cap (102) in the place of the said battery housing cap (102a).

10. Assembly according to the preceding claim, **characterized in that** the identifier for unlocking and/or starting a motor vehicle (100) consists of a main body (101) to which is removably fixed either the battery-housing cap (102, 102a) or the alternative cap formed by the support for the identifier for the exercise of service entitlement (200) and **in that** the alternative cap formed by the support for the identifier for the exercise of service entitlement (200) has a surface appearance forming a visual distinction of this alternative cap (102) relative to the appearance of the surface of the main body (101) of the identifier for unlocking and/or starting (100) a motor vehicle.

## Patentansprüche

1. Einheit bestehend aus einer Entriegelungs- und/oder Startkennung (100) eines Kraftfahrzeugs, aus einer Gebrauchsrechtausübungskennung (200), die kontaktlos kommunizieren kann, und aus einem Nahfeldkommunikation-Lesegerät (300) von der Art NFC, wobei die Gebrauchsrechtsausübungskennung (200) unabhängig von der Entriegelungs- und/oder Startkennung (100) eine autonome NFC-Nahfeld-Kennung bildet, derart, dass die Gebrauchsrechtsausübungskennung (200) direkt mit dem NFC-Nahfeld-Lesegerät (300) kommuniziert, unabhängig davon, ob sie fest mit der Entriegelungs- und/oder Startkennung (100) verbunden oder von der Entriegelungs- und/oder Startkennung (100) getrennt ist, **dadurch gekennzeichnet, dass** die Gebrauchsrechtsausübungskennung (200) eine Haftfläche enthält, so dass die Kennung an einer Trägerfläche (102) der Entriegelungs- und/oder Startkennung (100) durch Haften befestigt wird.

2. Einheit nach Anspruch 1, **dadurch gekennzeichnet, dass** die Entriegelungs- und/oder Startkennung (100) ein Batteriefach (103) und eine entfernbare Kappe (102) des Batteriefachs enthält, und dass die Gebrauchsrechtsausübungskennung (200) an der Kappe (102) des Batteriefachs (103) befestigt ist.

3. Einheit nach dem vorhergehenden Anspruch, **dadurch gekennzeichnet, dass** die Kappe (102) eine zum Inneren des Batteriefachs (103) gerichtete Seite und eine zur Außenseite der Entriegelungs- und/oder Fahrzeugzugangskennung (100) gerichtete Seite enthält, und die Kennung der Gebrauchsrechtsausübungskennung (200) an der Seite der Kappe (120) des Batteriefachs befestigt ist, die zum Inneren des Batteriefachs (103) gerichtet ist.

4. Einheit nach einem der vorhergehenden Ansprüche, **dadurch gekennzeichnet, dass** die Gebrauchsrechtsausübungskennung (200) eine Zahlungskennung ist.

5. Einheit nach dem vorhergehenden Anspruch, **dadurch gekennzeichnet, dass** die Gebrauchsrechtskennung (102) eine Kennung von der Art Convego Air Mobile ist.

6. Einheit nach einem der vorhergehenden Ansprüche in Kombination mit Anspruch 2, **dadurch gekennzeichnet, dass** sie eine Austausch-Batteriefachkappe (102a) enthält, so dass die Start- und/oder Entriegelungskennung abwechselnd mit der Kappe (102), an der die Gebrauchsrechtsausübungskennung (200) befestigt ist, oder mit der Austauschkappe (102a) ausgestattet werden kann.

7. Einheit nach dem vorhergehenden Anspruch, **dadurch gekennzeichnet, dass** die Entriegelungs- und/oder Startkennung eines Kraftfahrzeugs (100) aus einem Hauptkörper (101) besteht, an dem die Batteriefachkappe (102) entfernbar befestigt ist, an der die Gebrauchsrechtsausübungskennung befestigt ist, und die Kappe (102), an der die Gebrauchsrechtsausübungskennung befestigt ist, ein Oberflächenaussehen aufweist, das eine visuelle Unterscheidung vom Oberflächenaussehen des Hauptkörpers (101) der Entriegelungs- und/oder Startkennung eines Kraftfahrzeugs bildet.

8. Einheit nach einem der vorhergehenden Ansprüche, **dadurch gekennzeichnet, dass** die Entriegelungs- und/oder Startkennung (100) ein Batteriefach (103) und eine entfernbare Kappe (102a) des Batteriefachs sowie einen Träger (102) enthält, der entfernbar an der Batteriefachkappe befestigt ist, und dass die Gebrauchsrechtsausübungskennung am Träger (102) befestigt ist, der entfernbar an der Kappe des Batteriefachs befestigt ist.

9. Einheit nach dem vorhergehenden Anspruch, **dadurch gekennzeichnet, dass** der entfernbar an der entfernbaren Kappe (102a) des Batteriefachs befestigte Träger (102) eine alternative Kappe (102) zur Batteriefachkappe (102a) bildet, so dass das Batteriefach (103) alternativ mit der Batteriefachkappe (102a) oder mit dem Träger (102) ausgestattet werden kann, der die Gebrauchsrechtsausübungskennung (200) trägt, wobei der Träger (102) dann eine alternative Batteriefachkappe (102) anstelle der Batteriefachkappe (102a) bildet.

10. Einheit nach dem vorhergehenden Anspruch, **dadurch gekennzeichnet, dass** die Entriegelungs- und/oder Startkennung eines Kraftfahrzeugs (100) aus einem Hauptkörper (101) besteht, an dem entweder die Batteriefachkappe (102, 102a) oder die alternative Kappe entfernbar befestigt wird, die vom Träger der Gebrauchsrechtsausübungskennung (200) gebildet wird, und dass die vom Träger der Gebrauchsrechtsausübungskennung (200) gebildete alternative Kappe ein Oberflächenaussehen hat, das eine visuelle Unterscheidung dieser alternativen Kappe (102) vom Oberflächenaussehen des Hauptkörpers (101) der Entriegelungs- und/oder Startkennung (100) eines Kraftfahrzeugs bildet.
